# EUROPEAN PATENT APPLICATION

(11) **EP 4 523 969 A1**
(43) Date of publication of application: **19.03.2025**
(21) Application number: 24200482.8
(22) Date of filing: 16.09.2024
(51) Int. Cl.: B60R 11/02

(54) **SYSTEM FOR MOVING A DEVICE DISPLAYING CONTENTS OF A ROAD VEHICLE**

(30) Priority: 18.09.2023 IT 202300019116
(71) Applicant: FERRARI S.p.A., 41100 Modena (IT); De Molli Giancarlo Industries S.p.A., 21040 Castronno (Varese) (IT)
(72) Inventor: VITALONI, Francesco, 41100 MODENA (IT); STAMPACCHIA, Demetrio, 41100 MODENA (IT); BASSANI, Stefano, 21040 CASTRONNO (VA) (IT); GNONI, Moreno, 21040 CASTRONNO (VA) (IT)
(74) Representative: Studio Torta S.p.A.

(57) **Abstract**

A system for moving a device displaying contents of a road vehicle has a ball joint (8) provided with a fixed coupling portion (9) configured to be connected to a dashboard mounted inside a passenger compartment of the road vehicle and a movable coupling portion (10) coupled to the fixed coupling portion (9) in a rotary manner and configured to be connected to a screen (3) of the content displaying device; the ball joint (8) being configured so as to have a rotation centre (C) coinciding with a centre of gravity (B) of the assembly defined by the screen (3) and by the movable coupling portion (10) .

## Description

### CROSS-REFERENCE TO RELATED APPLICATIONS

This patent application claims priority from Italian patent application no. 102023000019116 filed on September 18, 2023, the entire disclosure of which is incorporated herein by reference.

### TECHNICAL FIELD

The present invention relates to a system for moving a device displaying contents of a road vehicle.

### CONTEXT

In particular, the present invention relates to a device displaying contents of a road vehicle of the type comprising a support unit configured to be connected to a dashboard mounted inside a passenger compartment of the road vehicle; a screen for displaying contents; and a moving system to connect the support unit and the screen to each other.

Generally, the moving system is configured to allow a driver and/or a passenger of the road vehicle to orient the screen with respect to the support unit and to display its content correctly.

Since the moving system normally comprises at least one electrical drive device to orient the screen with respect to the support unit, the known content displaying devices of the type described above are relatively complex and costly.

### SUMMARY

The object of the present invention is to provide a system for moving a device displaying contents of a road vehicle that is free from the drawbacks described here above and that is simple and cheap to manufacture.

According to the present invention, there is provided a system for moving a device displaying contents of a road vehicle as claimed in the appended claims.

### BRIEF DESCRIPTION OF THE FIGURES

The present invention will now be described with reference to the appended drawings, which illustrate a non-limiting embodiment thereof, wherein:

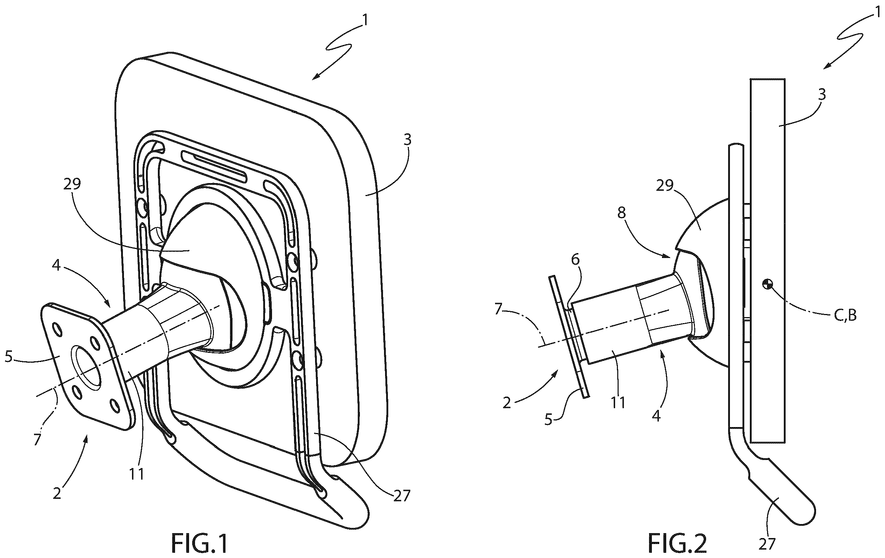

Figure 1 is a schematic perspective view of a preferred embodiment of the content displaying device of the present invention;
Figure 2 is a schematic side view of the device of Figure 1;

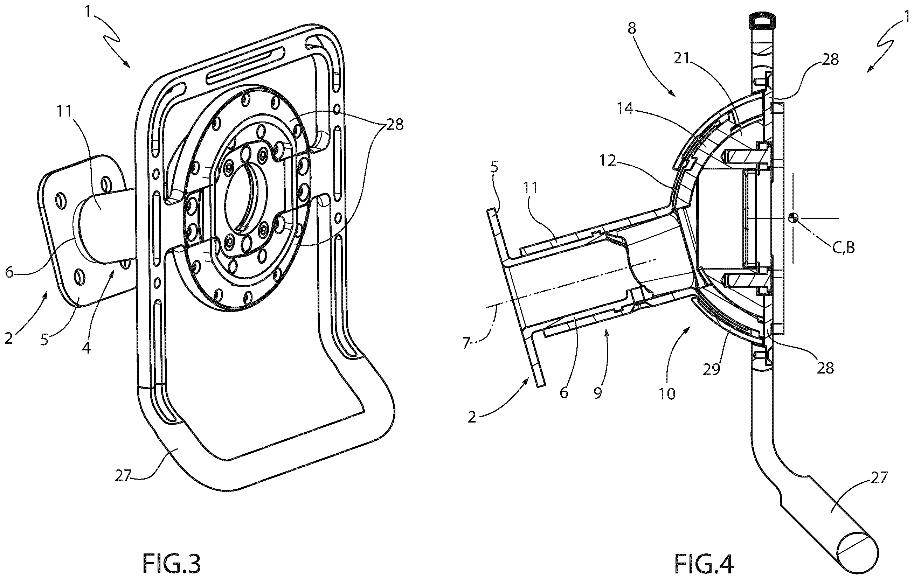

Figure 3 is a schematic perspective view of a detail of the device of Figure 1;
Figure 4 is a schematic side view, with parts in cross-section, of the detail of Figure 3;

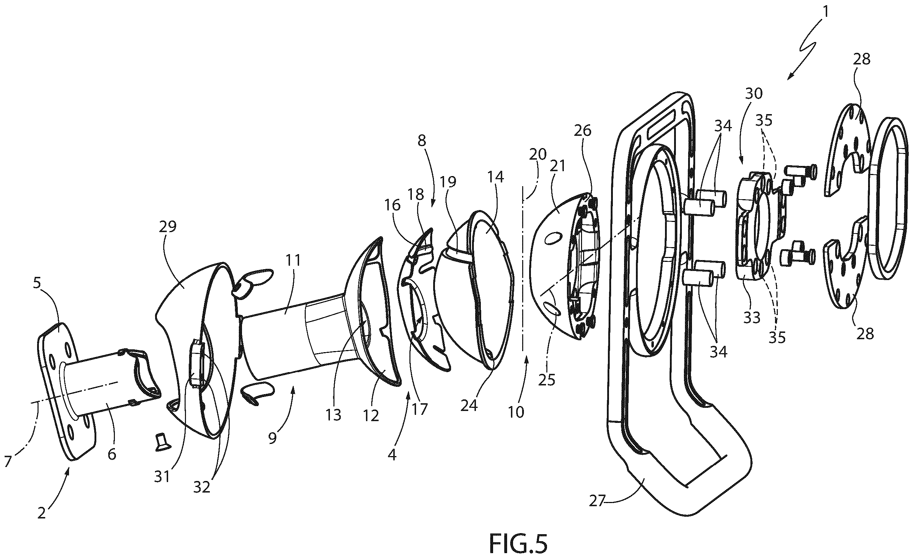

Figure 5 is an exploded perspective view of the device of Figure 1;
Figure 6 is an exploded perspective view of a detail of Figure 5; and
Figure 7 is an exploded perspective view of a variant of the device of Figure 1.

### DESCRIPTION OF EMBODIMENTS

With reference to the Figures from 1 to 5, the number 1 indicates, as a whole, a content displaying device adapted to be installed inside a passenger compartment (not shown) of a road vehicle (not shown).

The device 1 comprises a support unit 2 configured to be connected to a dashboard (not shown) mounted inside a passenger compartment (not shown) of the road vehicle (not shown); a screen 3 for displaying the content; and a moving system 4 to connect the support unit 2 and the screen 3 to each other.

The support unit 2 comprises a substantially flat fastening plate 5 configured to be fixed to the dashboard (not shown) of the passenger compartment (not shown) of the road vehicle (not shown), and a tubular shank 6, which has a longitudinal axis 7 and projects from the plate 5 inside the passenger compartment (not shown).

The moving system 4 comprises a ball joint 8 comprising, in turn, a fixed coupling portion 9 connectable in a releasable manner with the support unit 2 and a movable coupling portion 10 coupled in a rotary manner to the portion 9 and connected to the screen 3.

The joint 8 is configured so as to have a rotation centre C coinciding with a centre of gravity B of the assembly defined by the screen 3 and by the movable coupling portion 10.

The fixed coupling portion 9 comprises a support column 11 with a tubular shape, which is made of a metal material, is adapted to be fitted onto the shank 6 coaxially to the axis 7, and is couplable in a releasable manner, in particular by means of a bayonet coupling, to the shank 6 itself.

The column 11 is provided, at one free end, with a cup-shaped spherical coupling element 12 provided with a central hole 13 substantially coaxial to the axis 7.

The movable coupling portion 10 comprises a cup-shaped spherical coupling element 14, which is made of a metal material, and has a central hole 15.

The element 14 is coupled in a rotary manner to the element 12 by means of the interposition of an intermediate cup-shaped spherical element 16, which is made of a plastic material, is fixed inside the element 12, and has a central hole 17 substantially coaxial to the axis 7.

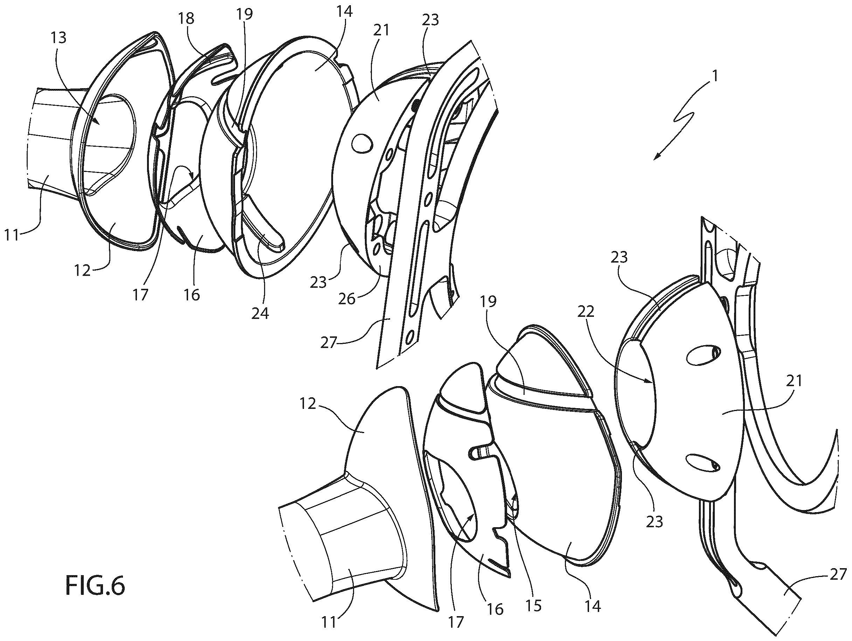

According to what is shown in Figure 6, the element 16 has a tooth 18 with a circular shape, which projects from an inner surface of the element 16, and is engaged in a sliding manner in a recess 19 with a circular shape obtained on an outer surface of the element 14 to allow the element 14 to rotate with respect to the assembly defined by the element 12 and by the element 16 around a rotation axis 20 parallel to the screen 3.

The movable coupling portion 10 further comprises a cup-shaped spherical coupling element 21, which is made of a plastic material, and has a central hole 22.

The element 21 has two recesses 23, which are obtained on an outer surface of the element 21, are obtained on opposite sides of the hole 22 transversely to the tooth 18 and to the recess 19, and are engaged in a sliding manner by corresponding teeth 24 obtained on an inner surface of the element 14.

The teeth 24 project from the inner surface of the element 14, are obtained on opposite sides of the hole 15 transversely to the tooth 18 and to the recess 19, and are coupled in a sliding manner to the recesses 23 to allow the element 14 and the element 21 to rotate one with respect to the other around a rotation axis 25 transverse to the axis 20 and parallel to the screen 3.

The element 21 is limited axially by a free flat surface 26 with an annular shape, and carries connected a handle 27 with a substantially rectangular shape, which is fixed to the surface 26 by means of the interposition of a coupling flange 28, and allows a driver and/or a passenger of the road vehicle (not shown) to orient the screen 3 around the axes 20 and/or 25.

The movable coupling portion 10 further comprises two closing elements 29, 30, which are mounted on opposite sides of the elements 12, 14, 16, and 21, and are connected to each other by means of a plurality of tightening screws (not shown).

The element 29 has a spherical annular shape, extends around the element 12, and has two appendages 31 opposite to each other, which project radially towards the outside from the element 29, and are provided with respective threaded holes 32 configured to receive and to retain the tightening screws (not shown).

The element 30 comprises a substantially flat plate 33 connected in a sliding manner to the handle 27 by means of engagement of the tightening screws (not shown) through the handle 27 itself.

The assembly defined by the elements 14 and 21 and by the handle 27 is pressed against the assembly defined by the elements 12 and 16 by a plurality of springs 34, which are interposed between the plate 33 and the element 21, and exert, each, a respective thrust selectively controlled by an adjustment screw 35 mounted through the plate 33 itself.

With regard to what is described above, it is opportune to specify that:
the screen 3 is fixed to the handle 27 on the opposite side of the coupling element 21; and
the rotation centre C and the centre of gravity B are arranged inside the screen 3 and outside the ball joint 8.

The content displaying device 1 has several advantages deriving mainly from the fact that:
the screen 3 is oriented manually by means of the handle 27 and, therefore, in a relatively simple and cheap manner; and
the elements 16 and 21 in plastic material guarantee a relatively reduced friction between the elements 12, 14, 16, and 21.

The content displaying device 1 also has a further advantage consisting in the fact that the rotation centre C of the ball joint 8 coincides with the centre of gravity B of the assembly defined by the screen 3 and by the movable coupling portion 10 and that, therefore, the result of the forces produced on the content displaying device 1 during normal operation of the road vehicle (not shown) extends both through the centre of gravity B, and through the centre C, has an arm equal to zero and produces, therefore, a zero rotation torque.

As a consequence, the position of the rotation centre C of the ball joint 8 and the action of the springs 34 on the elements 12, 14, 16, and 21 prevent accidental movement of the screen 3 around the axes 20 and/or 25 and allow movement of the screen 3 solely following the intervention of the driver and/or the passenger of the road vehicle (not shown).

The content displaying device 1 has, in conclusion, further advantages consisting in the fact that:
the coupling between the shank 6 and the column 11 allows the content displaying device 1 to be mounted on the dashboard (not shown) once assembly of the dashboard itself (not shown) has been terminated and, therefore, the structural and visual integrity of the content displaying device 1 itself to be maintained; and
the spherical shape of the cup-shaped coupling elements 12, 14, 21 allows the electrical cables (not shown) used to guarantee correct functioning of the screen 3 to be housed inside the content displaying device 1, without, therefore, compromising the visual aspect.

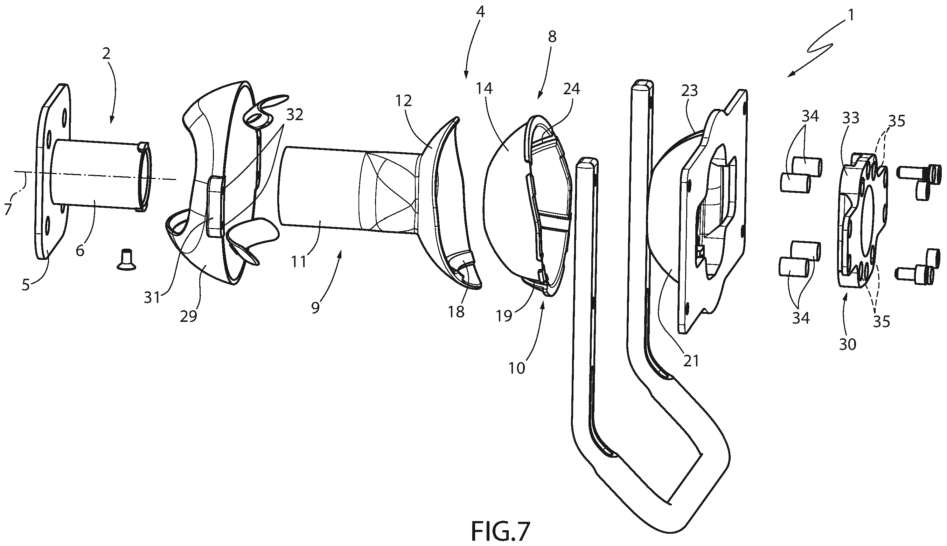

The variant shown in Figure 7 differs from what is shown in the preceding figures solely in the fact that, on it:
the intermediate element 16 is eliminated;
the coupling element 14 is made of plastic material and the coupling element 21 is made of metal material; and
the tooth 18 is obtained on the inner surface of the coupling element 12.

According to a variant not shown, the handle 27 has different shapes to the one shown in the appended figures.

## Claims

1. A system for moving a device displaying contents of a road vehicle, the moving system comprising a ball joint (8) comprising, in turn, a fixed coupling portion (9) configured to be connected to a dashboard mounted inside a passenger compartment of the road vehicle and a movable coupling portion (10) coupled to the fixed coupling portion (9) in a rotary manner and configured to be connected to a screen (3) of the content displaying device; the ball joint (8) being configured so as to have a rotation centre (C) coinciding with a centre of gravity (B) of the assembly defined by the screen (3) and by the movable coupling portion (10).

2. The moving system according to claim 1, wherein the fixed coupling portion (9) and the movable coupling portion (10) are configured to allow the screen (3) to rotate around a first rotation axis (20) and around a second rotation axis (25), which are transverse to one another and parallel to the screen (3) .

3. The moving system according to claim 2, wherein the fixed coupling portion (9) comprises a first coupling element (12) with a spherical shape and wherein the movable coupling portion (10) comprises a second coupling element (14) with a spherical shape coupled to the first coupling element (12) so as to rotate around the first rotation axis (20) and a third coupling element (21) with a spherical shape coupled to the second coupling element (14) in a rotary manner so as to rotate around the second rotation axis (25); the screen (3) being carried by the third coupling element (21).

4. The moving system according to claim 3, wherein the ball joint (8) further comprises at least one first tooth (18) with a circular shape obtained on one of said first and second coupling elements (12, 14) and at least one first recess (19) with a circular shape obtained on the other one of said first and second coupling elements (12, 14) and engaged by the first tooth (18) in a sliding manner.

5. The moving system according to claim 3 or 4, wherein the ball joint (8) further comprises at least one second tooth (24) with a circular shape obtained on one of said second and third coupling elements (14, 21) and at least one second recess (23) with a circular shape obtained on the other one of said second and third coupling elements (14, 21) and engaged by the second tooth (24) in a sliding manner.

6. The moving system according to any one of the claims from 3 to 5, wherein said first and third coupling elements (12, 21) are made of a metal material and wherein the second coupling element (14) is made of a plastic material.

7. The moving system according to any one of the claims from 3 to 5, wherein said first and second coupling elements (12, 14) are made of a metal material and wherein the third coupling element (21) is made of a plastic material; the movable coupling portion (10) further comprising an intermediate element (16), which is mounted between said first and second coupling elements (12, 14) and is made of a plastic material.

8. The moving system according to any one of the preceding claims, wherein the ball joint (8) further comprises elastic pushing means (34) to clamp the fixed coupling portion (9) and the movable coupling portion (10) against one another.

9. The moving system according to claim 8, wherein the ball joint (8) further comprises adjusting means (35) to adjust the thrust exerted by the elastic pushing means (34) to clamp the fixed coupling portion (9) and the movable coupling portion (10) against one another.

10. The moving system according to claim 8 or 9, when it depends on any one of the claims from 3 to 7, wherein the movable coupling portion (10) further comprises two closing elements (29, 30), which are mounted on opposite sides of said first, second and third coupling elements (12, 14, 21) and are connected to one another.

11. The moving system according to claim 10, wherein a first closing element (29) has a spherical shape and extends around the first coupling element (12); the elastic pushing means (34) being mounted between the third coupling element (21) and a second closing element (30).

12. The moving system according to any one of the preceding claims, wherein the fixed coupling portion (9) is configured to be coupled, in a releasable manner, to a support unit (2) comprising a fixing base (5) mounted on the dashboard of the road vehicle and a tubular shank (6) projecting from the fixing base (5); the fixed coupling portion (9) further comprising a support column (11) configured to be coupled to the tubular shank (6) of the support unit (2) in a releasable manner, in particular by means of a bayonet coupling.

13. The moving system according to any one of the preceding claims, wherein the movable coupling portion (10) further comprises a handle (27) configured to allow a driver and/or a passenger of the road vehicle to orient the movable coupling portion (10) relative to the fixed coupling portion (9).

14. The moving system according to any one of the preceding claims, wherein the rotation centre (C) and the centre of gravity (B) are arranged inside the screen (3) and outside the ball joint (8).
